# EUROPEAN PATENT APPLICATION

(11) **EP 3 911 008 A1**
(43) Date of publication of application: **17.11.2021**
(21) Application number: 18937045.5
(22) Date of filing: 24.10.2018
(51) Int. Cl.: H04W 36/00

(54) **MODE-SWITCHABLE BLUETOOTH DEVICE, BLUETOOTH CONNECTION SYSTEM, AND BLUETOOTH CONNECTION METHOD**

(30) Priority: 18.10.2018 CN 201811213579
(71) Applicant: XYLINK TECHNOLOGY CO., LTD., Beijing 100089 (CN)
(72) Inventor: LI, Yuxuan, Beijing 100089 (CN)
(74) Representative: Huang, Liwei
(86) International application number: PCT/CN2018/111624
(87) International publication number: WO 2020/077659

(57) **Abstract**

The present application relates to a mode-switchable Bluetooth device, a Bluetooth connection system including the same, and a Bluetooth connection method. The mode-switchable Bluetooth device includes a processing unit with a mobile device operating system mounted therein, and a Bluetooth component that is configured to switch a connection mode under control of the processing unit. The mode-switchable Bluetooth device is configured to establish a connection with an external Bluetooth device by switching the connection mode when failing to establish a connection with a target Bluetooth device. With the mode-switchable Bluetooth device of the present application, running reliability of a multi-Bluetooth-device connection system can be significantly improved, and the multi-Bluetooth-device connection system can be smoothly switched into a point-to-point Bluetooth connection system under abnormal conditions.

## Description

### Technical Field

The present application relates to the field of Bluetooth devices and Bluetooth connections, in particular to a mode-switchable Bluetooth device, a Bluetooth connection system including the same, and a Bluetooth connection method.

### Background

At present, on-board central control systems with comprehensive processing capabilities are generally provided in vehicles. In addition, with the wide application of Bluetooth devices in various devices such as smart terminals, portable devices, and wearable devices, the on-board central control systems may generally provide on-board Bluetooth modules to conveniently establish Bluetooth connections with the various Bluetooth devices. The on-board Bluetooth modules and Bluetooth modules of mobile phones are the same in the implementation mechanism, and have the same emission system. Generally speaking, on-board Bluetooth is an in-car wireless communication system designed and developed based on a wireless Bluetooth technology, is mainly used to connect the on-board Bluetooth modules to the mobile phones through the Bluetooth connections, so as to realize various applications such as calls, audio playing, and voice navigation in a vehicle driving environment.

In some application scenarios, based on consideration of user's operational safety, convenience, privacy protection, and the like, it is necessary to establish mutual connection between two or more Bluetooth devices, for example, to establish a Bluetooth link among an on-board Bluetooth device, a Bluetooth headset, and any user terminal having a Bluetooth function. In some embodiments, Bluetooth components in the on-board Bluetooth device and the user terminal (such as a mobile phone) are set to a master mode, and the Bluetooth component in the Bluetooth headset is set to a slave mode. It is apparent that the Bluetooth headset is used as an intermediate node in a multi-Bluetooth-device connection system.

In these scenarios, if the Bluetooth device that serves as the intermediate node is abnormally connected, or not within a Bluetooth connection range, or the like, the rest Bluetooth devices cannot directly establish the Bluetooth link due to their same connection mode, such as the same master mode or the same slave mode, and therefore the overall multi-Bluetooth-device connection system will be unavailable.

There are no corresponding methods in the related art to solve the above problems.

The information disclosed in the Background section of the present application is only intended to deepen the understanding of the general background of the present application, and should not be regarded as a recognition or any form of implication that the information constitutes the related art already known to those skilled in the art.

### Summary

To solve the above-mentioned problems, the present application provides a mode-switchable Bluetooth device, including:
a processing unit with a mobile device operating system mounted therein; and
a Bluetooth component configured to switch a connection mode under control of the processing unit.

Alternatively, in the Bluetooth device according to an embodiment of the present application, the Bluetooth component is configured to be initially set to a master mode under control of the processing unit, and used to establish a connection with a target Bluetooth device that is in a slave mode.

Alternatively, in the Bluetooth device according to an embodiment of the present application, the processing unit is configured to monitor a connection inquiry time of the Bluetooth component, and control the Bluetooth component to be set to a slave mode when the connection inquiry time exceeds a preset connection time threshold.

Alternatively, in the Bluetooth device according to an embodiment of the present application, the processing unit is configured to obtain a Received Signal Strength Indicator (RSSI) of the target Bluetooth device, and control the Bluetooth component to be set to a slave mode when the RSSI is lower than a preset signal strength threshold.

Alternatively, in the Bluetooth device according to an embodiment of the present application, the mobile device operating system includes one from an Android operating system and a WINCE operating system.

According to another aspect of the present application, a Bluetooth connection system is further provided, including:
the mode-switchable Bluetooth device described as the first aspect mentioned above;
a target Bluetooth device set to a slave mode; and
an external Bluetooth device set to a master mode.

The mode-switchable Bluetooth device is configured to establish a connection with the external Bluetooth device by switching the connection mode when failing to establish a connection with the target Bluetooth device.

Alternatively, in the Bluetooth connection system according to an embodiment of the present application, the mode-switchable Bluetooth device is configured to be initially set to a master mode, and is changed to be set to a slave mode when failing to establish a connection with the target Bluetooth device.

Alternatively, in the Bluetooth connection system according to an embodiment of the present application, the processing unit is configured to monitor a connection inquiry time of the Bluetooth component, and control the Bluetooth component to be set to a slave mode when the connection inquiry time exceeds a preset connection time threshold.

Alternatively, in the Bluetooth connection system according to an embodiment of the present application, the processing unit is configured to obtain a Received Signal Strength Indicator (RSSI) of the target Bluetooth device, and control the Bluetooth component to be set to a slave mode when the RSSI is lower than a preset signal strength threshold.

According to yet another aspect of the embodiments of the present application, a Bluetooth connection method for the Bluetooth connection system is further provided, which includes the following steps.

The mode-switchable Bluetooth device is initialized and the mobile device operating system is run.

The target Bluetooth device is inquired by means of the mode-switchable Bluetooth device.

A connection with the external Bluetooth device is established by switching the connection mode of the mode-switchable Bluetooth device when the mode-switchable Bluetooth device fails to establish a connection with the target Bluetooth device.

Alternatively, in the extended connection system according to an embodiment of the present application, the step of initializing includes the following steps.

The Bluetooth component in the mode-switchable Bluetooth device is set to a master mode.

Alternatively, in the Bluetooth connection system according to an embodiment of the present application, the steps of establishing a connection with the external Bluetooth device by switching the connection mode of the mode-switchable Bluetooth device when the mode-switchable Bluetooth device fails to establish a connection with the target Bluetooth device include the following steps.

The Bluetooth component is controlled to switch to a slave mode when a connection inquiry time of the mode-switchable Bluetooth device exceeds a preset connection time threshold.

A connection is established between the mode-switchable Bluetooth device and the external Bluetooth device.

Alternatively, in the Bluetooth connection system according to an embodiment of the present application, the steps of establishing a connection with the external Bluetooth device by switching the connection mode of the mode-switchable Bluetooth device when the mode-switchable Bluetooth device fails to establish a connection with the target Bluetooth device include the following steps.

The Bluetooth component is controlled to switch to a slave mode when a Received Signal Strength Indicator (RSSI) of the target Bluetooth device detected by the mode-switchable Bluetooth device is lower than a preset signal strength threshold.

A connection is established between the mode-switchable Bluetooth device and the external Bluetooth device.

According to the technical solutions provided by the embodiments of the present application, the mode-switchable Bluetooth device is provided, which can significantly improve the running reliability of the multi-Bluetooth-device connection system, and eliminates the hidden danger of failure of the overall multi-Bluetooth-device connection system that may be caused by conditions such as a single Bluetooth device being abnormal or being out of the connection range. In addition, based on the mode-switchable Bluetooth device provided in the embodiments of the present application, customized Bluetooth connection solutions that fit different scenarios and meet different user requirements can be provided, and the Bluetooth connection mode in the corresponding scenario is enabled to be more flexible and variable, thereby providing a good user experience that cannot be given by the related art.

### Brief Description of the Drawings

The accompanying drawings constituting a part of the present application are used to provide a further understanding of this application, so that other features, objectives, and advantages of this application become more apparent. The schematic drawings and descriptions thereof in the embodiments of the present application are intended to explain this application, and do not constitute an improper limitation on this application. In the drawings:
Fig. 1 is a schematic block diagram of a mode-switchable Bluetooth device 10 according to an embodiment of the present application;
Fig. 2 is a schematic block diagram of a Bluetooth connection system 100 including multiple Bluetooth devices according to an embodiment of the present application; and
Fig. 3 is a flowchart of a Bluetooth connection method for the Bluetooth connection system 100 according to an embodiment of the present application.

### Detailed Description of the Embodiments

In order to make the solutions of the present application better understood by those skilled in the art, the technical solutions in the embodiments of the present application will be clearly and completely described below in combination with the drawings in the embodiments of the present application. It is apparent that the described embodiments are not all embodiments but part of embodiments of the present application. All other embodiments obtained by those of ordinary skilled in the art on the basis of the embodiments in the present application without creative work shall fall within the scope of protection of the present application.

In addition, terms "mount", "set", "provided with", "connect", "configure to" and the like should be broadly understood. For example, the terms may refer to fixed connection, detachable connection, or integration. The terms may refer to mechanical connection or electrical connection. The terms may also refer to direct connection, or indirect connection through a medium, or communication in two devices, or elements or components. Those of ordinary skill in the art can understand specific implications of the above terms in the present application according to specific situations.

It is to be noted that the embodiments in the present application and the features in the embodiments may be combined under the condition of no conflicts. The present application is described below with reference to the drawings and in conjunction with the embodiments in detail.

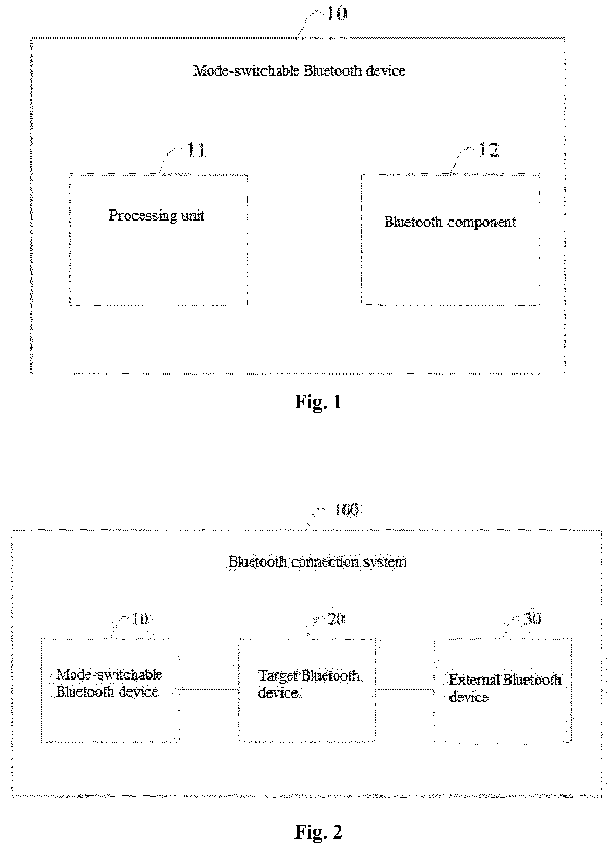

According to an aspect of the present application, a mode-switchable Bluetooth device is provided. As shown in Fig 1, the mode-switchable Bluetooth device 10 includes:
a processing device 11 with a mobile device operating system mounted therein; and
a Bluetooth component 12 configured to switch a connection mode under control of the processing unit.

In some embodiments, the mode-switchable Bluetooth device 10 is an on-board Bluetooth device that includes the processing unit 11 and the Bluetooth component 12. In some embodiments, the on-board Bluetooth device further includes an on-board loudspeaker, an on-board microphone, and other functional modules.

To achieve the objective of the present application, the processing unit 11 runs the mobile device operating system when started. In some embodiments, an Android system serves as an operating system of the processing unit 11.

Bluetooth (Bluetooth®) is a wireless technology standard that allows the short-range exchange of data among fixed devices, mobile devices, and building personal area networks (using Ultra High Frequency (UHF) radio wave in the Industrial Scientific and Medical (ISM) band from 2.4 GHz to 2.485 GHz).

An Android platform provides support for a Bluetooth communication stack, allowing a device to wirelessly transmit data with other devices. An application tier calls Bluetooth related functions through Android Application Programming Interfaces (APIs). These APIs enable programs to be wirelessly connected to Bluetooth devices and to have the characteristics of point-to-point connection or multi-terminal wireless connection.

Commonly used Bluetooth-related Android APIs are shown in Table 1 below.

**Table 1**

| | |
|---|---|
| Bluetooth Adapter | Represents the local device Bluetooth adapter (Bluetooth radio). BluetoothAdapter is an entrance for all Bluetooth interactions, which lets you initiate device discovery, query a list of bonded (paired) devices, instantiate a BluetoothDevice using a known MAC address, and create a BluetoothServerSocket to listen for communication with other devices. |
| BluetoothDevice | Represents a remote Bluetooth device. A BluetoothDevice lets you create a connection with the respective device or query information about it, such as the name, address, class, and bonding state. |
| BluetoothSocket | Represents a Bluetooth socket interface (similar to a TCP Socket). This is a connection point that allows an application to exchange data with other Bluetooth devices through Inputstream and OutputStream. |
| BluetoothServerSocket | Represents an open server socket, and is configured to listen for accepted requests (similar to a TCP ServerSocket). In order to connect two Android devices, one device must use this class to start a server socket. When a remote Bluetooth device initiates a connection request with the device, BluetoothServerSocket will return a connected BluetoothSocket to accept the connection. |

According to the above-mentioned embodiments of the present application, take the on-board Bluetooth device as an example of the mode-switchable Bluetooth device, the on-board Bluetooth device runs the Android operating system when started. In some embodiments, the technical solutions of the present application use a combination order in a standard Android system to realize master-slave mode switching of the Bluetooth component; in some other embodiments, the technical solutions of the present application use the adapted APIs to realize the function of master-slave mode switching of the Bluetooth component, herein when an abnormal connection condition of a target Bluetooth device is detected, the above-mentioned APIs are called to control the Bluetooth component to perform master-slave mode switching.

In some embodiments, the target Bluetooth device takes a Bluetooth headset as an example. Alternatively, the Bluetooth headset can establish a Bluetooth connection with any user terminal (for example, a smart phone) having a Bluetooth function, and can also establish a connection with the foregoing mode-switchable Bluetooth device at the same time.

Alternatively, the Bluetooth headset is set to a slave mode, and accordingly can be respectively establish a Bluetooth connection with the on-board Bluetooth device (i.e., the foregoing mode-switchable Bluetooth device) and the external Bluetooth device (the smart phone) that are respectively set to the master mode. The multi-Bluetooth-device connection system can achieve providing a required data transmission channel and corresponding node control between two or more Bluetooth devices, is therefore adaptable to more complicated application scenarios and provides solutions meeting user requirements better.

As shown in Fig. 2, some embodiments of the present application provide a Bluetooth connection system 100 including multiple Bluetooth devices. The Bluetooth connection system includes:
a mode-switchable Bluetooth device 10 taking an on-board Bluetooth device as an example;
a target Bluetooth device 20 taking a Bluetooth headset as an example and set to a slave mode; and
an external Bluetooth device 30 taking a smart phone as an example and set to a master mode.

The mode-switchable Bluetooth device 10 is configured to establish a connection with the external Bluetooth device 30 by switching the connection mode when failing to establish a connection with the target Bluetooth device 20.

When the Bluetooth headset has abnormal conditions such as faults, low power, or being out of the connection range of the on-board Bluetooth device, if the on-board Bluetooth device and the smart phone maintain their original mode settings (here both are master modes), they cannot directly establish the Bluetooth connection with each other to provide a common point-to-point data transmission application. In such case, the multi-Bluetooth-device connection system cannot be smoothly converted into the point-to-point Bluetooth connection system.

In order to eliminate the hidden danger described above, according to some embodiments of the present application, the on-board Bluetooth device is initially set to the master mode when started, and then establishes a connection with the external Bluetooth device (the smart phone) by switching its connection mode when failing to establish a connection with the target Bluetooth device (i.e., the Bluetooth headset in this example).

The technical solution of the present application is described in detail below by taking a specific on-board scenario as an example.

First, the on-board Bluetooth device is started, and is set to a master mode by default; in this mode, the on-board Bluetooth device actively searches for the Bluetooth headset and initiates a link. If the link is successful, the on-board Bluetooth device maintains the existing link.

If the search for the Bluetooth headset and the link both fail within a period of time (such as three minutes), that is, an abnormal condition occurs, the on-board Bluetooth device exits the master mode and enters a slave mode, and the system entering the on-board Bluetooth slave mode is prompted on an on-board display interface.

The above-mentioned abnormal condition includes the followings.
1. When the Bluetooth headset is abnormal, the link between the on-board Bluetooth device and the Bluetooth headset is cut off, and the on-board Bluetooth device actively links back to the Bluetooth headset; if the search and the link both fail within a period of time (for example, three minutes), the on-board Bluetooth device exits the master mode and enters the slave mode, and the system entering the on-board Bluetooth slave mode is prompted on the on-board display interface.
2. When a distance between the Bluetooth headset and the Bluetooth device exceeds a preset threshold, the on-board Bluetooth device detects signal quality of the Bluetooth headset, and actively initiates a connection when the signal quality reaches a certain value; the on-board Bluetooth model keeps in the slave mode if the signal quality is poor or there is no signal.

Generally, the RSSI of the Bluetooth headset is detected as an indicator of the signal quality of the Bluetooth headset.

In some embodiments, the smart phone taken as an example of the external Bluetooth device may provide support for an A2DP audio transmission protocol, so as to be able to establish a connection with the Bluetooth headset or the on-board Bluetooth device and perform high-quality audio data transmission.

A2DP is short for Advanced Audio Distribution Profile, which is adaptable to transmission of high-quality audio data, and specifically refers to transmitting high-quality single-track or stereo audio data using an Asynchronous Connectionless (ACL) link established at a Logical Link Control and Adaptation Protocol (L2CAP) level. The connection between the smart phone and other Bluetooth devices is established based on the A2DP protocol, and a chip in the headset can be used to stack data to realize high-definition presentation of the transmitted audio data.

According to the general process, the connection between two Bluetooth devices is carried out as follows. First, a master unit uses a General Inquiry Access Code (GIAC) and a Dedicated Inquiry Access Code (DIAC) to inquire the Bluetooth devices within a certain range (an inquiry sub-state). If a nearby Bluetooth device listens for these inquiries (an inquiry scan sub-state), it may respond to the master unit by sending its own address and clock information (an FHS data packet) to the master unit (an inquiry response sub-state). After these messages are sent, a slave unit starts to listen for a page message from the master unit (page scan). After discovering the Bluetooth devices within the range, the master unit may page these devices (a page sub-state) to establish connections. If the slave unit in the page scan state is paged by the master unit, the slave unit may immediately respond with its own Device Access Code (DAC) (a slave response sub-state). After receiving the response from the slave unit, the master unit may transmit its real-time clock, Bluetooth Device Address (BD_ADDR), BCH (Bose, Chaudhuri, Hocquenghem) parity bits, and device categories (an FHS data packet) as a response. After the slave unit receives the FHS data packet, the master unit and the slave unit immediately enter a connection state. In the process of establishing the connection between the Bluetooth devices, the following states are mainly involved.

Page: This sub-state is used by the master unit to activate and connect the slave unit. The master unit sends the page message by transmitting the DAC of the slave unit in different frequency hopping channels.

Page scan: in this sub-state, the slave unit listens for its own DAC during a window scan survival time. In the scan window, the slave unit listens with single frequency hopping (derived from its page frequency hopping sequence).

Slave response: the slave unit, in this sub-state, responds to the page message of the corresponding master unit. If the slave unit in the page scan sub-state is related to the page message of the master unit, it enters this state. The slave unit enters a connection state after receiving the FHS data packet from the master unit.

Master response: the master unit enters this sub-state after receiving the response of the slave unit to its page message. If the slave unit replies to the master unit, the master unit sends the FHS data packet to the slave unit, and then enters the connection state.

Inquiry: inquiry is used to discover identity of a neighboring Bluetooth device. A discovery unit collects an address of the Bluetooth device and clocks of all units responding to the inquiry message.

Inquiry scan: in this state, the Bluetooth device listens for inquiries from other devices. At this time, a scanning device may listen for the GIAC or the DIAC.

Inquiry response: for an inquiry, only the slave unit can respond and the master unit cannot. The slave unit responds with the FHS data packet which contains the device access code, internal clocks and some other information of the slave unit.

Atypical page process is performed by the following steps.
1) One device (source) pages another device (sink), and here it is in a Page state.
2) The sink device receives the page, here it is in a Page scan state.
3) The sink device sends a reply to the source device, and here it is in a Slave Response state.
4) The source device sends an FHS packet to the sink device, and here it is in a Master Response state.
5) The sink device sends a second reply to the source device, and here it is in a Slave Response state.
6) The sink device and the source device switch and parameters of a source channel are used, and here they are in a Master Response state and a Slave Response state.

In some other embodiments, the WINCE system of Microsoft serves as an operating system of the processing unit 11.

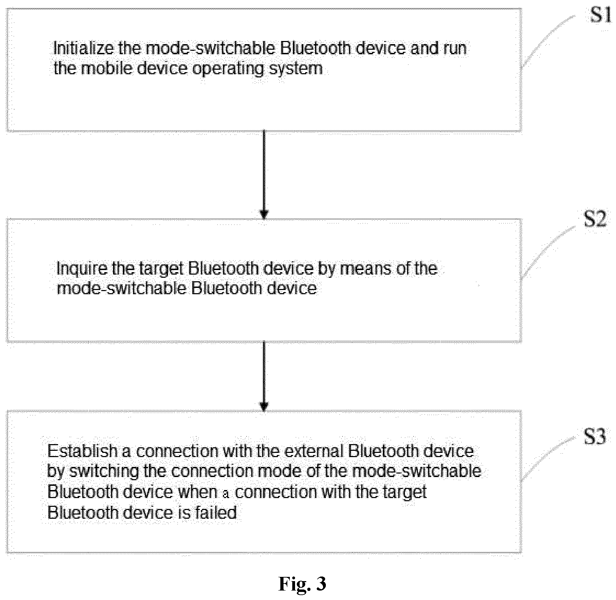

According to another aspect of the present application, a Bluetooth connection method for the Bluetooth connection system is further provided. As shown in Fig. 3, the Bluetooth connection method includes the following steps.

S1, The mode-switchable Bluetooth device is initialized and the mobile device operating system is run.

S2, The target Bluetooth device is inquired by means of the mode-switchable Bluetooth device.

S3, A connection is established with the external Bluetooth device by switching the connection mode of the mode-switchable Bluetooth device when the mode-switchable Bluetooth device fails to establish a connection with the target Bluetooth device.

Alternatively, in the extended connection system according to an embodiment of the present application, the step of initializing includes the following step.

The Bluetooth component is set in the mode-switchable Bluetooth device to a master mode.

Alternatively, in the Bluetooth connection method according to an embodiment of the present application, the steps of establishing a connection with the external Bluetooth device by switching the connection mode of the mode-switchable Bluetooth device when the mode-switchable Bluetooth device fails to establish a connection with the target Bluetooth device include the following steps.

The Bluetooth component is controlled to switch to a slave mode when a connection inquiry time of the mode-switchable Bluetooth device exceeds a preset connection time threshold.

A connection is established between the mode-switchable Bluetooth device and the external Bluetooth device.

Alternatively, in the Bluetooth connection method according to an embodiment of the present application, the steps of establishing a connection with the external Bluetooth device by switching the connection mode of the mode-switchable Bluetooth device when the mode-switchable Bluetooth device fails to establish a connection with the target Bluetooth device include the following steps.

The Bluetooth component is controlled to switch to a slave mode when a Received Signal Strength Indicator (RSSI) of the target Bluetooth device detected by the mode-switchable Bluetooth device is lower than a preset signal strength threshold.

A connection is established between the mode-switchable Bluetooth device and the external Bluetooth device.

It is apparent that according to the embodiments of the present application, the mode-switchable Bluetooth device is provided, which can significantly improve the running reliability of the multi-Bluetooth-device connection system, enable the multi-Bluetooth-device connection system to be smoothly converted into the point-to-point Bluetooth connection system when the Bluetooth headset has abnormal conditions such as faults, low power, or being out of the connection range of the on-board Bluetooth device, thereby eliminating the hidden danger of failure of the overall multi-Bluetooth-device connection system that may be caused by conditions such as a single Bluetooth device being abnormal or being out of the connection range. In addition, based on the mode-switchable Bluetooth device provided in the embodiments of the present application, the Bluetooth connection mode in the corresponding scenario is enabled to be more flexible and variable, and therefore customized Bluetooth connection solutions that fit different scenarios and meet different user requirements can be provided can be provided.

The above are only the preferred embodiments of the present application and not intended to limit the present application. For those skilled in the art, the present application can have various modifications and variations. Any modifications, equivalent replacements, improvements and the like within the spirit and principle of the present application shall fall within the scope of protection as defined in the appended claims of the present application.

### Industrial Applicability

According to the technical solutions provided by the above-mentioned embodiments, the mode-switchable Bluetooth device is provided, which can significantly improve the running reliability of the multi-Bluetooth-device connection system, and eliminates the hidden danger of failure of the overall multi-Bluetooth-device connection system that may be caused by conditions such as a single Bluetooth device being abnormal or being out of the connection range. In addition, based on the mode-switchable Bluetooth device provided in the embodiments of the present application, customized Bluetooth connection solutions that fit different scenarios and meet different user requirements can be provided, and the Bluetooth connection mode in the corresponding scenario is enabled to be more flexible and variable, thereby providing a good user experience that cannot be given by the related art.

## Claims

1. A mode-switchable Bluetooth device, comprising:
a processing unit with a mobile device operating system mounted therein; and
a Bluetooth component configured to switch a connection mode under control of the processing unit.

2. The Bluetooth device as claimed in claim 1, wherein the Bluetooth component is configured to be initially set to a master mode under control of the processing unit and used to establish a connection with a target Bluetooth device that is in a slave mode.

3. The Bluetooth device as claimed in claim 2, wherein the processing unit is configured to monitor a connection inquiry time of the Bluetooth component, and control the Bluetooth component to be set to a slave mode when the connection inquiry time exceeds a preset connection time threshold.

4. The Bluetooth device as claimed in claim 2, wherein the processing unit is configured to obtain a Received Signal Strength Indicator (RSSI) of the target Bluetooth device, and control the Bluetooth component to be set to a slave mode when the RSSI is lower than a preset signal strength threshold.

5. The Bluetooth device as claimed in claim 1, wherein
the mobile device operating system comprises one from an Android operating system and a WINCE operating system.

6. A Bluetooth connection system, comprising:
the mode-switchable Bluetooth device as claimed in claim 1;
a target Bluetooth device set to a slave mode; and
an external Bluetooth device set to a master mode,
wherein the mode-switchable Bluetooth device is configured to establish a connection with the external Bluetooth device by switching the connection mode when failing to establish a connection with the target Bluetooth device.

7. The Bluetooth connection system as claimed in claim 6, wherein the mode-switchable Bluetooth device is configured to be initially set to a master mode, and is changed to be set to a slave mode when failing to establish a connection with the target Bluetooth device.

8. The Bluetooth connection system as claimed in claim 7, wherein the processing unit is configured to monitor a connection inquiry time of the Bluetooth component, and control the Bluetooth component to be set to a slave mode when the connection inquiry time exceeds a preset connection time threshold.

9. The Bluetooth connection system as claimed in claim 8, wherein the connection time threshold is 3 minutes.

10. The Bluetooth connection system as claimed in claim 7, wherein the processing unit is configured to obtain a Received Signal Strength Indicator (RSSI) of the target Bluetooth device, and control the Bluetooth component to be set to a slave mode when the RSSI is lower than a preset signal strength threshold.

11. A Bluetooth connection method for the Bluetooth connection system as claimed in claim 6, comprising:
initializing the mode-switchable Bluetooth device and running the mobile device operating system;
inquiring the target Bluetooth device by means of the mode-switchable Bluetooth device; and
establishing a connection with the external Bluetooth device by switching the connection mode of the mode-switchable Bluetooth device when the mode-switchable Bluetooth device fails to establish a connection with the target Bluetooth device.

12. The Bluetooth connection method as claimed in claim 11, wherein the step of initializing comprises:
setting the Bluetooth component in the mode-switchable Bluetooth device to a master mode.

13. The Bluetooth connection method as claimed in claim 12, wherein the steps of establishing a connection with the external Bluetooth device by switching the connection mode of the mode-switchable Bluetooth device when the mode-switchable Bluetooth device fails to establish a connection with the target Bluetooth device comprise:
controlling the Bluetooth component to switch to a slave mode when a connection inquiry time of the mode-switchable Bluetooth device exceeds a preset connection time threshold; and
establishing a connection between the mode-switchable Bluetooth device and the external Bluetooth device.

14. The Bluetooth connection method as claimed in claim 12, wherein the steps of establishing a connection with the external Bluetooth device by switching the connection mode of the mode-switchable Bluetooth device when the mode-switchable Bluetooth device fails to establish a connection with the target Bluetooth device comprise:
controlling the Bluetooth component to switch to a slave mode when a Received Signal Strength Indicator (RSSI) of the target Bluetooth device detected by the mode-switchable Bluetooth device is lower than a preset signal strength threshold; and
establishing a connection between the mode-switchable Bluetooth device and the external Bluetooth device.
